# EUROPEAN PATENT APPLICATION

(11) **EP 4 664 631 A1**
(43) Date of publication of application: **17.12.2025**
(21) Application number: 23924952.7
(22) Date of filing: 24.10.2023
(51) Int. Cl.: H01M 50/209, H01M 50/244, H01M 10/613, H01M 10/6561, H01M 10/6567

(54) **ENERGY STORAGE CONTAINER AND ENERGY STORAGE CONTAINER SYSTEM**

(30) Priority: 27.02.2023 CN 202320412783 U
(71) Applicant: Huawei Digital Power Technologies Co., Ltd., Shenzhen, Guangdong 518043 (CN)
(72) Inventor: WANG, Yongling, Shenzhen, Guangdong 518043 (CN); JIANG, Zhishun, Shenzhen, Guangdong 518043 (CN); YU, Shijiang, Shenzhen, Guangdong 518043 (CN)
(74) Representative: Gill Jennings & Every LLP
(86) International application number: PCT/CN2023/126203
(87) International publication number: WO 2024/178998

(57) **Abstract**

This application provides an energy storage container and an energy storage container system. The energy storage container includes a container body. The container body has accommodation space. The accommodation space includes a plurality of battery compartments and one temperature control compartment. The plurality of battery compartments are sequentially arranged in a first direction to form a battery region. The temperature control compartment is located between two adjacent battery compartments, or the temperature control compartment is located at an end part that is of the battery region and that is in the first direction. Each of the battery compartments is provided with a door plate, and all of door plates are located on a same side of the container body. The energy storage container provided in this application has high space utilization, high energy density, low levelized costs of storage, and high system efficiency, and is designed with a single door. Therefore, self-stacking may be implemented to form an energy storage container system for transport, and a high-density side-by-side arrangement may be further implemented to form an energy storage container system for an application scenario.

## Description

This application claims priority to Chinese Patent Application No. 202320412783.9, filed with the China National Intellectual Property Administration on February 27, 2023 and entitled "ENERGY STORAGE CONTAINER AND ENERGY STORAGE CONTAINER SYSTEM", which is incorporated herein by reference in its entirety.

### TECHNICAL FIELD

This application relates to the field of energy storage device manufacturing technologies, and in particular, to an energy storage container and an energy storage container system using the energy storage container.

### BACKGROUND

With the wide application of new energy (such as solar energy and wind energy) power generation, electrochemical energy storage is extensively promoted. Lithium battery energy storage is highly favored due to its non-reliance on geographical terrain and its capability to achieve rapid storage and release of electric energy. To meet requirements of the energy storage market, an energy storage system is generally in a container form. How to reduce an occupied area of an energy storage container, improve internal space utilization, increase an integration level of the energy storage container, lower costs, and facilitate long-distance transport become urgent problems to be resolved.

### SUMMARY

In view of this, to resolve at least one of the foregoing defects, an embodiment of this application provides an energy storage container. The energy storage container has high space utilization, high energy density, low levelized costs of storage, and high system efficiency, and is designed with a single door. Therefore, self-stacking may be implemented to form an energy storage container system for transport, and a high-density side-by-side arrangement may be further implemented to form an energy storage container system for an application scenario.

A first aspect of an embodiment of this application provides an energy storage container. The energy storage container includes a container body. The container body has accommodation space. The accommodation space includes a plurality of battery compartments and one temperature control compartment. The plurality of battery compartments are sequentially arranged in a first direction to form a battery region. The temperature control compartment is located between two adjacent battery compartments, or the temperature control compartment is located at an end part that is of the battery region and that is in the first direction. Each of the battery compartments is provided with a door plate, and all of the door plates are located on a same side of the container body.

The temperature control compartment and the battery compartment are integrated together, so that integration of an energy storage system is implemented, to improve an integration level of the energy storage container. Moreover, the temperature control compartment is disposed at an end of the battery region or between battery compartments, and may perform temperature control for the plurality of battery compartments in a centralized manner without a need to dispose a temperature control apparatus in each battery compartment. This saves space in the battery compartment, so that more batteries can be accommodated, thereby helping improve energy density of the energy storage container and lower costs. In addition, the energy storage container is designed with a single door. This facilitates single-side maintenance of the battery compartment and meets a requirement for a side-by-side arrangement of three sides of the container body other than a side on which the door plate is disposed, to minimize a distance between two adjacent container bodies, reduce occupied space of the energy storage container system in an application scenario, and improve energy density.

For example, the container body may be of a hexahedron structure, and includes a first side surface, a second side surface, a third side surface, and a fourth side surface that are sequentially connected head to tail. The first side surface and the third side surface are disposed opposite to each other in the first direction. The second side surface and the fourth side surface are disposed opposite to each other in a second direction. The container body further includes a bottom surface and a top surface that are disposed opposite to each other in a third direction. The bottom surface and the top surface are both connected to and enclosed with the first side surface, the second side surface, the third side surface, and the fourth side surface to form the accommodation space. All of the door plates are located on the second side surface, and the first direction, the second direction, and the third direction are perpendicular to each other. In addition, outer surfaces of the first side surface, the third side surface, and the fourth side surface are flat, and free from external protrusions. The energy storage container is designed with a single door, and outer surfaces of other side surfaces are flat and free from an external structural feature of protruding from the container body. This helps container bodies of energy storage containers be disposed side by side or back to back. Therefore, a distance between two adjacent energy storage containers is shortened, to further reduce occupied space, improve space utilization, and increase occupied space density.

For example, the container body may be of a cuboid structure. The first direction is a length direction of the container body. The second direction is a width direction of the container body. The third direction is a height direction of the container body. A length of the container body is 6058 mm. A width of the container body is 2438 mm. A height of the container body ranges from 2.591 m to 4.15 m. For example, the height may be 2.591 m, 2.896 m, 3.100 m, 3.300 m, 3.600 m, 4.150 m, or a value between any two values above. A standard container architecture (for example, a 20-foot standard marine container) is used for the container body and can be directly used as a transport container. There is no need to independently dispose a transport container on an outer side of the energy storage container. This helps improve a transport capability and reduce transport costs. In addition, the height can be designed based on requirements for actual energy density, to meet requirements for different power station energy storage scenarios.

With reference to the first aspect, in some possible embodiments, each of an edge of the bottom surface and an edge of the top surface is provided with a set of corner piece assemblies. Further, each set of corner piece assemblies includes two or four corner pieces. When each set of corner piece assemblies includes the two corner pieces, the two corner pieces are disposed on two opposite edges of the bottom surface or the top surface. When each set of corner piece assemblies includes the four corner pieces, the four corner pieces are disposed on four corners of the bottom surface or the top surface.

The set of corner piece assemblies are separately disposed on the top surface and the bottom surface of the container body, so that self-stacking of the energy storage containers can be implemented (that is, the plurality of energy storage containers are stacked vertically together). The corner piece assemblies can implement connection and fixing between two vertically adjacent energy storage containers, to meet transport requirements. In this way, the energy storage containers can be directly stacked and transported, thereby reducing transport costs.

With reference to the first aspect, in some possible embodiments, in the third direction, a plurality of detachable battery packs are disposed in a stacked manner in the battery compartment at intervals, and each of the battery packs is configured to accommodate a battery. Further, a size of the battery pack in the second direction ranges from 1.7 m to 2.2 m. For example, the battery pack.

The plurality of battery packs are disposed in a stacked manner in the battery compartment, so that a battery capacity can be improved, and energy density of the energy storage container can be further improved. The single-door design of the energy storage container can implement single-side maintenance of the battery pack. In addition, a depth size of the battery pack is close to a width of the container body, so that maximum utilization of width space of the container body can be achieved, to further improve energy density of the energy storage container.

With reference to the first aspect, in some possible embodiments, the temperature control compartment has an air inlet and an air outlet. The air inlet and the air outlet form a heat dissipation channel. The air inlet is disposed on a side surface of the container body, and the air outlet is disposed on a top surface of the container body.

Air intake and exhaust modes of the temperature control compartment are designed to intake from the side of the container body and exhaust from the top of the container body. An arrangement of the energy storage container in the application scenario may not affect air intake and exhaust. This implements a high-density layout, further reduces occupied space, and improves occupied space density. For example, no side plate may be disposed on a side surface corresponding to the temperature control compartment, and an open air inlet may be directly formed. It may be understood that the air inlet may also be formed by making an opening on a side plate of the side surface.

For example, a liquid cooling module is disposed in the temperature control compartment. The liquid cooling module is connected to the air inlet and the air outlet. A cooling pipeline of the liquid cooling module extends to the battery region. Integration of a liquid cooling temperature control system in the energy storage container enables efficient heat dissipation for the battery compartment. Compared with an air cooling system, the liquid cooling system allows for a ductless design. This saves internal space within the container body and enables the container body to accommodate more batteries. In addition, the non-cell levelized costs of storage of the energy storage container are greatly reduced. Moreover, the liquid cooling module does not need to be connected to an external air conditioner cabinet. This benefits an arrangement of the energy storage containers side by side and further reduces a spacing between the two adjacent container bodies. With reference to the first aspect, in some possible embodiments, the container body further includes a functional compartment. The functional compartment is located on a side that is of the battery compartment and that is close to the bottom surface.

The functional compartment may be configured to accommodate necessary power devices (such as a PCS or a DCDC). The functional compartment may be flexibly deployed in the energy storage container, improving an integration level and a prefabrication rate of the energy storage container. In addition, the functional compartment is disposed at the bottom of each battery compartment, so that occupied space is small, and control of each battery compartment is facilitated. The functional compartment may share one door plate with the battery compartment, improving maintenance convenience.

A second aspect of an embodiment of this application provides an energy storage container system. The energy storage container system includes a plurality of energy storage containers that are disposed in a stacked manner. The energy storage container is the energy storage container according to the first aspect of embodiments of this application.

The energy storage container in the first aspect of embodiments of this application can meet transport requirements. A plurality of energy storage containers may be directly stacked in a third direction (that is, be stacked vertically, or be self-stacked) for transport, without a need to independently dispose a transport container for accommodating. This reduces transport costs and improves a transport capacity. Certainly, the energy storage containers may further be stacked side by side in a first direction and a second direction.

A third aspect of an embodiment of this application provides another energy storage container system. The energy storage container system includes a plurality of energy storage containers that are disposed side by side. The energy storage container is the energy storage container according to the first aspect of embodiments of this application. Further, in a case in which no firewall is disposed, a distance between two adjacent energy storage containers may be 0 mm to 200 mm. For example, the distance between the two adjacent energy storage containers may be 0 (that is, side surfaces of the two adjacent energy storage containers are in contact with each other), 20 mm, 40 mm, 60 mm, 80 mm, 100 mm, 120 mm, 140 mm, 160 mm, 180 mm, 200 mm, or a value between any two values above.

The energy storage container in the first aspect of embodiments of this application enables the energy storage container system to achieve high energy density, high efficiency, and low costs. The energy storage container is designed with a single door, so that the side-by-side arrangement of the plurality of energy storage containers in an application scenario is facilitated. In addition, a spacing between the two adjacent energy storage containers is small, so that occupied space can be minimized, occupied space density can be increased, and energy density of the energy storage container system can be further improved.

### BRIEF DESCRIPTION OF DRAWINGS

FIG. 1 is a schematic diagram of a structure of an energy storage container according to an embodiment of this application;
FIG. 2 is a schematic diagram of a structure of a self-stacking energy storage container system for transport according to an embodiment of this application;
FIG. 3A and FIG. 3B are schematic diagrams of two forms of air intake and exhaust of the energy storage container in FIG. 1;
FIG. 4 is a schematic diagram of a structure of a battery pack according to an embodiment of this application; and
FIG. 5 is a schematic diagram of a structure of an energy storage container system for an application scenario according to an embodiment of this application.

**Description of reference signs of main components:**

| | |
|---|---|
| Energy storage container | 100 |
| Container body | 1 |
| First side surface | 11 |
| Second side surface | 12 |
| Third side surface | 13 |
| Fourth side surface | 14 |
| Bottom surface | 15 |
| Top surface | 16 |
| Accommodation space | 2 |
| Battery compartment | 3 |
| Door plate | 31 |
| Temperature control compartment | 4 |
| Air inlet | 42 |
| Air outlet | 43 |
| Corner piece | 5 |
| Battery pack | 6 |
| Liquid cooling module | 7 |
| Functional compartment | 8 |
| Direction | X, Y, Z |
| Energy storage container system | 200, 300 |

### DESCRIPTION OF EMBODIMENTS

The following describes embodiments of this application with reference to the accompanying drawings in embodiments of this application.

Terms used in the following embodiments are only intended to describe specific embodiments, but are not intended to limit this application. The expressions "one", "a", "the", "the foregoing", "this", and "the one" of singular forms used in this specification and the appended claims of this application are also intended to include expressions such as "one or more", unless otherwise specified in the context clearly.

Reference to "an embodiment", "some embodiments", or the like described in this specification indicates that one or more embodiments of this application include a specific feature, structure, or characteristic described with reference to the embodiments. Therefore, statements such as "in an embodiment", "in some embodiments", "in some other embodiments", and "in other embodiments" that appear at different places in this specification do not necessarily refer to a same embodiment. Instead, the statements mean "one or more but not all of embodiments", unless otherwise specifically emphasized in another manner. The terms "include", "comprise", and "have", and variants thereof all mean "include but are not limited to", unless otherwise specifically emphasized in another manner.

An energy storage system is an apparatus integrating a battery and a control cabinet. The control cabinet is coupled to the battery, manages the battery, and implements storage and output of electric energy through conversion between the electric energy and chemical energy. The battery may be used as a backup power supply, perform peak shaving and load shifting when a power supply is uneven in a power system, perform frequency modulation when power load or power generation is heavy in a power system, or is used in a photovoltaic energy storage and generation system.

Currently, the energy storage system is used in two application scenarios: an industrial and commercial energy storage scenario and a power station energy storage scenario. In the industrial and commercial energy storage scenario, an energy storage cabinet is usually used as a carrier, and power granularity is about 200 kWh. The energy storage cabinet is usually used in small and large-sized factories, commercial office buildings, sites and stations, and the like. In the power station energy storage scenario, an energy storage container is usually used as a carrier, and power granularity is usually at a megawatt-hour level. The energy storage container is usually used for photovoltaic energy storage and wind energy storage.

Transport of energy storage system means that the energy storage system is transported from a production side (manufacturer) to a user side (consumer). For ease of transport, batteries are placed in a battery compartment. The battery compartment and the control cabinet are integrated into a prefabricated compartment, and then the prefabricated compartment is placed in a standard container. The standard container is required to comply with the international standards formulated by the International Organization for Standardization ISO. The standards specify the sizes of a standard container, including the length, width, and height of the standard container, and impose limitations on the rated weight of the standard container.

The inventor finds that a commonly used energy storage container has an insufficient integration level, low space utilization within a container body, low energy density, high levelized costs of storage, and low system efficiency. Currently, most energy storage containers are prefabricated compartments. During transport, the prefabricated compartment needs to be replaced in a standard transport container. This increases transport costs. In addition, the prefabricated compartment and the standard container are different in size. As a result, space utilization within the standard container is low, and it is difficult to implement large-scale and low-cost transport. In addition, due to a structural design such as an external air conditioner fan or a double door, the existing energy storage container cannot be disposed side by side or back to back at an application scenario end. Moreover, a distance between two adjacent energy storage containers is large, resulting in large occupied space and low occupied space density.

Therefore, an embodiment of this application provides an improved energy storage container. In addition to being used for battery energy storage, the energy storage container may be further configured to load and transport other heavy objects. The following further describes embodiments of this application with reference to the accompanying drawings.

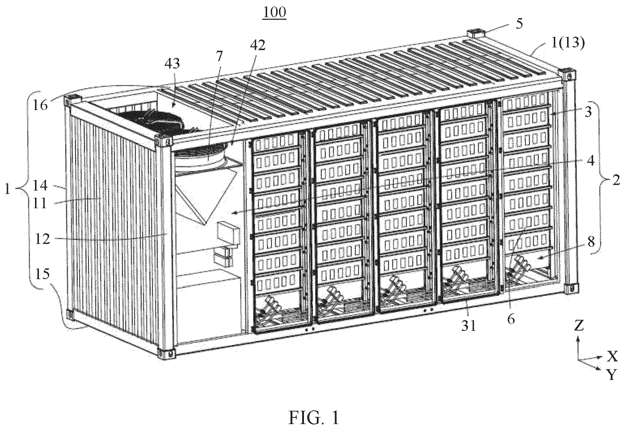

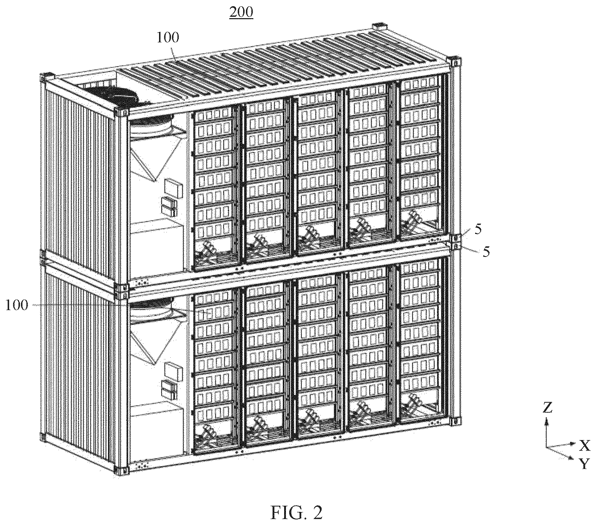

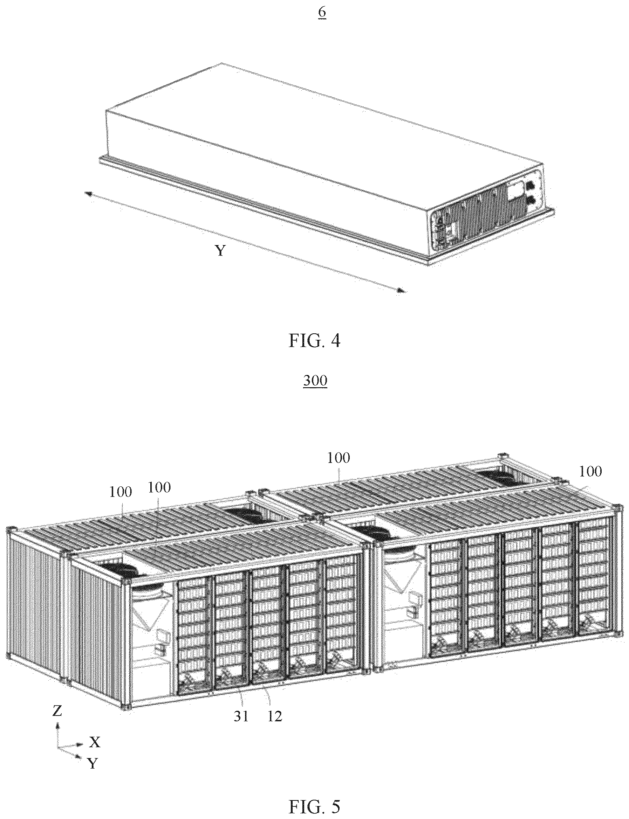

FIG. 1 shows an energy storage container 100 according to an embodiment of this application. FIG. 2 shows an energy storage container system 200, used in a transport process, formed by self-stacking a plurality of energy storage containers 100 (that is, one energy storage container is vertically stacked on another energy storage container). FIG. 5 shows an energy storage container system 300 formed by disposing a plurality of energy storage containers 100 side by side in an application scenario.

Refer to FIG. 1. An embodiment of this application provides an energy storage container 100. The energy storage container 100 includes a container body 1. The container body 1 has accommodation space 2. The accommodation space 2 includes a plurality of battery compartments 3 and one temperature control compartment 4. The plurality of battery compartments 3 are sequentially arranged in a first direction X to form a battery region A. The battery compartment 3 is configured to accommodate a battery. The temperature control compartment 4 is configured to centrally control temperatures of all of the battery compartments 3. There may be two position relationships between the temperature control compartment 4 and the battery compartment 3. The temperature control compartment 4 may be located between two adjacent battery compartments 3, or the temperature control compartment 4 may be located at an end part that is of the battery region A and that is in the first direction X. The plurality of battery compartments 3 and the temperature control compartment 4 are integrated into a same container body 1, so that a prefabricated integration level of the energy storage container 100 can be effectively improved. In addition, each of the battery compartments 3 is provided with a door plate 31, and all of the door plates 31 are located on a same side of the container body 1, so that the energy storage container 100 can be opened on a single side.

**In** FIG. 1, an X direction represents the first direction, a Y direction represents a second direction, and a Z direction represents a third direction. The container body 1 may be of a hexahedron structure, and may be specifically but is not limited to a cuboid structure. In this case, the first direction X, the second direction Y, and the third direction Z are perpendicular to each other. Because a standard container is basically of a cuboid structure, in this application, a three-dimensional coordinate system formed by the first direction X, the second direction Y, and the third direction Z is used to describe a three-dimensional size of the energy storage container 100. For example, the first direction X, the second direction Y, and the third direction Z may respectively represent a length direction, a width direction, and a height direction of the energy storage container 100.

The container body 1 includes a first side surface 11, a second side surface 12, a third side surface 13, and a fourth side surface 14 that are sequentially connected head to tail. The first side surface 11 and the third side surface 13 are disposed opposite to each other in the first direction X. The second side surface 12 and the fourth side surface 14 are disposed opposite to each other in the second direction Y. The container body 1 further includes a bottom surface 15 and a top surface 16 that are disposed opposite to each other in the third direction Z. The bottom surface 15 and the top surface 16 are both connected to and enclosed with the first side surface 11, the second side surface 12, the third side surface 13, and the fourth side surface 14 to form the accommodation space 2. Specifically, the container body 1 may be an integrated frame body formed by a beam and a vertical beam, and then the container body 1 is formed by sealing plates.

All of the door plates 31 are located on the second side surface 12, so that the energy storage container 100 can be opened on the single side. The door plate 31 may be a transparent door, so that a situation inside the battery compartment 3 is easily observed, and maintenance and management are facilitated. Certainly, the door plate 31 may also be an opaque door. Outer surfaces of the first side surface 11, the third side surface 13, and the fourth side surface 14 are flat, and no external protrusions are disposed. The energy storage container 100 is designed with a single door, and outer surfaces of other side surfaces are flat and free from a structural feature of protruding from the container body 1. At an application scenario end, this helps the plurality of energy storage containers 100 be disposed side by side and back to back. Therefore, a distance between two adjacent energy storage containers 100 is shortened, to further reduce occupied space, improve space utilization, and increase occupied space density.

In some embodiments, a length of the container body 1 is 6058 mm, a width of the container body 1 is 2438 mm, and a height of the container body 1 ranges from 2.591 m to 4.150 m. A standard container architecture (for example, a 20-foot standard marine container) is used for the length and width of the container body 1 and can be directly used as a transport container. There is no need to independently dispose a transport container on an outer side of the energy storage container 100. This helps improve a transport capability and reduce transport costs. In addition, for example, the height of the container body 1 may be 2.591 m, 2.896 m, 3.100 m, 3.300 m, 3.600 m, 4.150 m, or a value between any two values above. The height of the container body 1 can be designed based on requirements for actual energy density, to meet requirements for different power station energy storage scenarios.

Refer to FIG. 1 again. An edge of the bottom surface 15 and an edge of the top surface 16 each are provided with a set of corner piece assemblies. Further, each set of corner piece assemblies may include two or four corner pieces 5. It may be understood that each set of corner pieces 5 may further include more corner pieces 5. When each set of corner piece assemblies includes the two corner pieces 5, the two corner pieces 5 may be disposed on two opposite edges of the bottom surface 15 or the top surface 16. When each set of corner piece assemblies includes the four corner pieces 5, the four corner pieces 5 may be disposed on four corners of the bottom surface 15 or the top surface 16. Refer to FIG. 2. The energy storage container 100 provided in this embodiment of this application may implement self-stacking, thereby forming a self-stacking energy storage container system 200. To be specific, the plurality of energy storage containers 100 may be stacked in the third direction Z, or it may be understood that one energy storage container 100 may be stacked on another energy storage container 100 to meet transport requirements. The set of corner piece assemblies are separately disposed on the top surface 16 and the bottom surface 15 of the container body 1, so that self-stacking of the energy storage container 100 can be implemented. The corner piece 5 can implement connection and fixing between two vertically adjacent energy storage containers 100, so that the stacked energy storage containers 100 are firmer after being self-stacked to meet transport requirements. In this way, the energy storage containers 100 can be directly stacked and transported, thereby reducing transport costs.

Refer to FIG. 1 again. In the third direction Z (that is, the height direction of the container body 1), a plurality of detachable battery packs 6 are disposed in a stacked manner in the battery compartment 3 at intervals, and each of the battery packs 6 is configured to accommodate a battery. A multi-layer rack may be disposed in the battery compartment 3, and one battery pack 6 may be placed on each layer. It may be understood that multi-layer racks in the plurality of battery compartments 3 may be an integrated structure. Further, as shown in FIG. 4, a size of the battery pack 6 in the second direction Y may range from 1.7 m to 2.2 m. For example, the size of the battery pack 6 in the second direction Y may be 1.7 m, 1.8 m, 1.9 m, 2.0 m, 2.1 m, 2.2 m, or a value between any two values above. The plurality of battery packs 6 are disposed in a stacked manner in the battery compartment 3, so that a battery capacity can be improved, and energy density of the energy storage container 100 can be further improved. Moreover, the single-door design of the energy storage container 100 can implement single-side maintenance of the battery pack 6. This facilitates maintenance of the battery pack 6. In addition, a depth size of the battery pack 6 is close to a width of the container body 1, so that maximum utilization of width space of the container body 1 can be achieved, to further improve energy density of the energy storage container 100.

Refer to FIG. 1 again. The temperature control compartment 4 has an air inlet 42 and an air outlet 43. The air inlet 42 and the air outlet 43 form a heat dissipation channel. The air inlet 42 is disposed on a side surface of the container body 1. The side surface may be specifically at least one of the following: a first side surface 11, a second side surface 12, a third side surface 13, and a fourth side surface 14 of the container body 1. The air inlet 42 is specifically designed based on a disposing position of the temperature control compartment 4. The air outlet 43 is disposed on the top surface 16 of the container body 1. In some embodiments, a liquid cooling module 7 is disposed in the temperature control compartment 4. The liquid cooling module 7 is connected to the air inlet 42 and the air outlet 43. A cooling pipeline of the liquid cooling module 7 extends to the battery region, so that heat of all the battery compartments 3 can be quickly taken out of the container body 1. Integration of a liquid cooling temperature control system in the energy storage container 100 enables efficient heat dissipation for the battery compartment 3. Compared with an air cooling system, the liquid cooling system allows for a ductless design. This saves internal space within the container body 1 and enables the container body 1 to accommodate more batteries. In addition, the non-cell levelized costs of storage of the energy storage container 100 are greatly reduced. Moreover, compared with the air cooling system, the liquid cooling module 7 does not need to be disposed with an external air conditioner cabinet. This helps an outer side of the container body 1 be flat and further shortens a distance between the two adjacent energy storage containers 100 when the energy storage containers are disposed side by side.

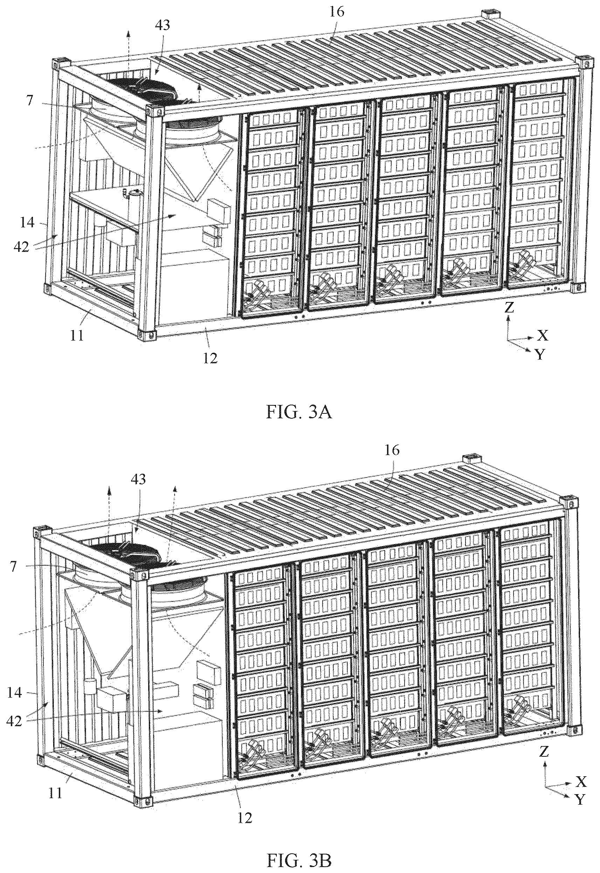

In some embodiments, FIG. 3A and FIG. 3B are schematic diagrams of two forms of air intake and exhaust of the energy storage container 100. A V-shaped air intake part is disposed at the bottom of a heat dissipator 71 of the liquid cooling module 7, and a heat dissipation part is disposed at the top. In FIG. 3A, two side walls that are of the V-shaped air intake part and that are with openings are disposed left and right. In FIG. 3B, two side walls that are of the V-shaped air intake part and that are with openings are disposed front and rear. In this way, different main air inlets may be selected when the energy storage containers 100 are disposed side by side, to form different main air intake channels. FIG. 5 shows an energy storage container system 300 after the plurality of energy storage containers 100 are disposed side by side. In an application scenario, because the second side surface 12 is a side surface on which the door plate 31 is disposed and is defined as a front side, the fourth side surface 14 is a rear side, the bottom surface 15 is a surface on which the energy storage container 100 and a bearing surface (for example, ground) are in contact with each other, and the top surface 16 is a top of the energy storage container 100. The energy storage container 100 uses a centralized liquid cooling solution. The liquid cooling module 7 may be deployed on a left side (the first side surface 11 is used as the left side), a right side (the third side surface 13 is used as the right side), or in the middle of the container body 1. Air intake mainly occurs through the second side surface 12. The first side surface 11, the third side surface 13, and the fourth side surface 14 serve for auxiliary air intake. An air exhaust region is disposed on the top of the container body 1. A left-front deployment is used as an example. As shown in FIG. 3A, in this case, an air inlet 42 disposed on the second side surface 12 is a main air inlet. When a distance between containers disposed side by side is large, an air inlet 42 disposed on the first side surface 11 may alternatively be used as a main air inlet. As shown in FIG. 3B, the air inlet 42 disposed on the second side surface 12 is used as the main air inlet, and an air inlet 42 disposed on another side surface is used as an auxiliary air inlet. In this way, after the energy storage containers 100 are disposed side by side, the main air inlet 42 of the temperature control compartment 4 may be located on the second side surface 12 (that is, the front side) of the container body 1. The first side surface 11 of the container body 1 may serve as a side on which the auxiliary air inlet 42 of the temperature control compartment 4 is located. When a distance between containers disposed back to back is large, the air inlet 42 may also be disposed on the fourth side surface 14 for auxiliary air intake. Air intake and exhaust modes of the temperature control compartment 4 are designed to intake from the side of the container body 1 and exhaust from the top of the container body 1, so that a side-by-side arrangement of the energy storage containers 100 in the application scenario may not affect air intake and exhaust. This implements a high-density layout of the energy storage container system 300, further reduces occupied space of the energy storage container system 300, and improves occupied space density.

Refer to FIG. 1 again. The container body 1 may further include a functional compartment 8. It may be understood that the functional compartment 8 may be flexibly arranged in the energy storage container 100. Specifically, the functional compartment 8 is located on a side that is of the battery compartment 3 and that is close to the bottom surface 15. That is, the functional compartment 8 is disposed close to the bottom surface 15 of the energy storage container 100. The functional compartment 8 may be configured to accommodate necessary power devices (such as a PCS or a DCDC). The functional compartment 8 is integrated into the container body 1, so that an integration level and a prefabrication rate of the energy storage container 100 can be improved. In addition, the functional compartment 8 is disposed at the bottom of each battery compartment 3, so that occupied space is small, and control of each battery compartment 3 is facilitated. The functional compartment 8 may share one door plate 31 with the battery compartment 3, improving maintenance convenience.

In the energy storage container 100 provided in this embodiment of this application, the temperature control compartment 4 and the battery compartment 3 are integrated together, so that integration of an energy storage system is implemented, to improve an integration level and a prefabrication rate of the energy storage container 100. Moreover, the temperature control compartment 4 is disposed at an end of the battery region or between two adjacent battery compartments 3, and may perform temperature control for the plurality of battery compartments 3 in a centralized manner without a need to dispose a temperature control apparatus in each battery compartment 3. This saves space in the battery compartment 3, so that more batteries can be accommodated, thereby helping improve energy density of the energy storage container 100 and lower costs. The energy storage container 100 is disposed with a single door. This facilitates single-side maintenance of the battery compartment 3 and meets a requirement for a side-by-side arrangement of three sides of the container body 1 other than a side on which the door plate is disposed, to shorten a distance between two adjacent energy storage containers 100, further minimize occupied space, and improve energy density. The container body 1 is designed to conform to a size of a transport standard container, and the corner piece 5 is disposed, so that self-stacking transport of the energy storage container 100 can be implemented, to achieve large-scale and low-cost transport. In addition, the liquid cooling module 7 can further save internal space within the container body 1 and enable the container body 1 to accommodate more batteries. In addition, the non-cell levelized costs of storage of the energy storage container 100 are reduced.

As shown in FIG. 2, the plurality of energy storage containers 100 are self-stacked to form an energy storage container system 200 that meets transport (for example, sea transport) requirements. The plurality of energy storage containers 100 may be directly vertically stacked for transport, without a need to independently dispose a transport container for accommodating the energy storage container 100. This reduces transport costs, improves a transport capacity, and further facilitates to implement large-scale and low-cost transport. It may be understood that, in a transport process, the energy storage container 100 may be further disposed side by side in the first direction X and the second direction Y, and then stacked in the third direction Z, to improve a transport capacity.

As shown in FIG. 5, at an application scenario end, the plurality of energy storage containers 100 are disposed side by side to form an energy storage container system 300 at an application end. The energy storage container system 300 is enabled to achieve high energy density, high efficiency, and low costs. The energy storage container 100 is designed with a single door, so that the side-by-side arrangement of the plurality of energy storage containers 100 in an application scenario is facilitated. In addition, a spacing between two adjacent energy storage containers 100 is small, so that occupied space can be minimized, occupied space density can be increased, and energy density of the energy storage container system 300 can be further improved. Further, in a case in which no firewall is disposed, a distance between the two adjacent energy storage containers 100 may be 0 mm to 200 mm. For example, the distance may be 0 (that is, side surfaces of the two adjacent energy storage containers 100 may be in contact with each other), 20 mm, 40 mm, 60 mm, 80 mm, 100 mm, 120 mm, 140 mm, 160 mm, 180 mm, 200 mm, or a value between any two values above. In a case in which a firewall needs to be disposed, because the firewall has a large width (generally about 400 mm), the distance between the two adjacent energy storage containers 100 may reach about 1000 mm.

It should be noted that the foregoing descriptions are merely specific implementations of this application, but are not intended to limit the protection scope of this application. Any variation or replacement readily figured out by a person skilled in the art within the technical scope disclosed in this application shall fall within the protection scope of this application. When no conflict occurs, implementations of this application and the features in implementations may be mutually combined. Therefore, the protection scope of this application shall be subject to the protection scope of the claims.

## Claims

1. An energy storage container, comprising:
a container body, wherein the container body has accommodation space, the accommodation space comprises a plurality of battery compartments and one temperature control compartment, the plurality of battery compartments are sequentially arranged in a first direction to form a battery region, and the temperature control compartment is located between the two adjacent battery compartments, or the temperature control compartment is located at an end part that is of the battery region and that is in the first direction; and
each of the battery compartments is provided with a door plate, and all of the door plates are located on a same side of the container body.

2. The energy storage container according to claim 1, wherein the container body comprises a first side surface, a second side surface, a third side surface, and a fourth side surface that are sequentially connected head to tail, the first side surface and the third side surface are disposed opposite to each other in the first direction, the second side surface and the fourth side surface are disposed opposite to each other in a second direction, the container body further comprises a bottom surface and a top surface that are disposed opposite to each other in a third direction, the bottom surface and the top surface are both connected to and enclosed with the first side surface, the second side surface, the third side surface, and the fourth side surface to form the accommodation space, each of the door plates is located on the second side surface, and the first direction, the second direction, and the third direction are perpendicular to each other.

3. The energy storage container according to claim 2, wherein the container body is of a cuboid structure, the first direction is a length direction of the container body, the second direction is a width direction of the container body, the third direction is a height direction of the container body, a length of the container body is 6058 mm, a width of the container body is 2438 mm, and a height of the container body ranges from 2.591 m to 4.15 m.

4. The energy storage container according to claim 2, wherein in the third direction, a plurality of detachable battery packs are disposed in a stacked manner in the battery compartment at intervals, and each of the battery packs is configured to accommodate a battery.

5. The energy storage container according to claim 4, wherein a size of the battery pack in the second direction ranges from 1.7 m to 2.2 m.

6. The energy storage container according to claim 2, wherein each of an edge of the bottom surface and an edge of the top surface is provided with a set of corner piece assemblies.

7. The energy storage container according to claim 6, wherein each set of corner piece assemblies comprises two or four corner pieces, and when each set of corner piece assemblies comprises the two corner pieces, the two corner pieces are disposed on two opposite edges of the bottom surface or the top surface; or when each set of corner piece assemblies comprises the four corner pieces, the four corner pieces are disposed on four corners of the bottom surface or the top surface.

8. The energy storage container according to claim 1, wherein the temperature control compartment has an air inlet and an air outlet, the air inlet and the air outlet form a heat dissipation channel, the air inlet is disposed on a side surface of the container body, and the air outlet is disposed on a top surface of the container body.

9. The energy storage container according to claim 8, wherein a liquid cooling module is disposed in the temperature control compartment, the liquid cooling module is connected to the air inlet and the air outlet, and a cooling pipeline of the liquid cooling module extends to the battery region.

10. The energy storage container according to claim 2, wherein the container body further comprises a functional compartment, and the functional compartment is located on a side that is of the battery compartment and that is close to the bottom surface.

11. An energy storage container system, comprising a plurality of energy storage containers, wherein the plurality of energy storage containers are disposed in a stacked manner or disposed side by side, and the energy storage container is the energy storage container according to any one of claims 1 to 10.
